## Europäisches Patentamt

## European Patent Office

## Office européen des brevets

(11) Veröffentlichungsnummer: **0 081 832**
**A1**

(12) ## EUROPÄISCHE PATENTANMELDUNG

(21) Anmeldenummer: **82111499.8**

(22) Anmeldetag: **11.12.82**

(51) Int. Cl.³: **G 01 F 23/10**

(30) Priorität: **16.12.81 DE 3149844**

(43) Veröffentlichungstag der Anmeldung: **22.06.83**
**Patentblatt 83/25**

(84) Benannte Vertragsstaaten: **AT BE CH DE FR GB IT LI LU NL SE**

(71) Anmelder: **DEUTSCHE TEXACO AKTIENGESELLSCHAFT, Überseering 40, D-2000 Hamburg 60 (DE)**

(72) Erfinder: **Baljöhr, Adolf, Achtern Barg 4e, D-2000 Barsbüttel (DE)**
Erfinder: **Schinlauer, Klaus, In der alten Forst 1c, D-2100 Hamburg 90 (DE)**

(74) Vertreter: **Schupfner, Gerhard et al, Patentanwälte Dipl.-Ing. Hans-Jürgen Müller Dipl.-Chem.Dr.phil.nat. Gerhard Schupfner Dipl.-Ing. Hans-Peter Gauger, Karlstrasse 5 D-2110 Buchholz in der Nordheide (DE)**

(54) **Tankfüllstand-Messeinrichtung.**

(57) Die Erfindung bezieht sich auf eine Tankfüllstand-Meßeinrichtung mit einer Meßsonde (23) an einem von einer Trommel (39) abwickelbaren Seil (21). Weiterhin gehört zu der Meßeinrichtung ein Aufrollmotor (49), der an der Trommelwelle (41) angreift und das Seil auf Spannung hält. Eine mechanische Anzeige erfolgt über ein mechanisches Anzeigegerät (61). Die Digitalanzeige erfolgt über einen Rotationsimpulsgeber (67), dessen Welle (65) mit der Trommelwelle (41) gekuppelt ist und der mittels Lichtsonden eine Schlitzscheibe abtastet.

Tankfüllstand-Meßeinrichtung                    D-006 81


Die Erfindung bezieht sich auf eine Tankfüllstand-Meßeinrichtung mit einer Meßsonde an einem von einer
Trommel abwickelbaren Seil, mit einem das Seil auf Spannung haltenden, an der Trommelwelle angreifenden Aufrollmotor und einem von der Trommelwelle betätigten
elektrischen Anzeigegerät.

Derartige Tankfüllstand-Meßeinrichtungen sind allgemein
bekannt und werden eingesetzt, um beispielsweise in
Mineralöltanks die Füllhöhe ständig zu überwachen. Die
Meßsonde besteht bei derartigen Tankfüllstand-Meßgeräten z. B. aus einem axial magnetisierten Dauermagnetstab, der in einem Rohr innerhalb des Tanks an
einem Seil hängend anheb- und absenkbar ist, oder aus
einem Schwimmer oder einer Tastplatte mit einer
entsprechenden Führung. Das Anheben wird mit Hilfe eines
Motors vorgenommen, der auf die Trommelwelle einwirkt,
die ihrerseits die das Seil aufwickelnde Trommel trägt.
Der Motor ist so konzipiert, daß er das die Meßsonde
haltende Seil immer unter Spannung hält.

Auf dem vertikal durch den Tank geführten, die Meßsonde
aufnehmenden Rohr ist z. B. ein Kugelschwimmer verschieblich gelagert. Der Kuegelschwimmer besteht aus
einer Hohlkugel, in der sich ein Ring ebenfalls axial
magnetisierter Dauermagnetsäulen befindet, die vertikal
ausgerichtet sind. Durch das Anheben und Absenken des
Kugelschwimmers wird die Meßsonde mitgenommen und gibt
damit die Füllhöhe des Tanks an. In einer anderen Ausführung gleitet ein Schwimmer, der direkt mit dem Seil verbunden ist, an einer vertikalen Führung im Tank auf und ab und gibt die Füllhöhe des Tanks an.

Eine ähnliche Ausführung wird benutzt, um mit einer Tastplatte die Flüssigkeitsoberfläche abzutasten.

Die Trommelwelle treibt bei einer aus der DE-OS 24 26 085 bekannten Meßeinrichtung über ein Reduziergetriebe einen Winkelkodierer an, der die Winkellage der Welle in ein elektrisches Digitalsignal umformt, das in bitparalleler, binär kodierter Form einem Empfangs- und Anzeigegerät zuführbar ist.

Eine Füllstandsanzeige mit Hilfe einer derartigen Meßeinrichtung ist außerordentlich ungenau und damit unbefriedigend. Es gibt z. B. Meßwertverfälschungen durch das Zusammenwirken des Kugelschwimmers mit der Meßsonde, die infolge des Schlupfes unvermeidlich sind. Ebenso unvermeidlich sind Meßfehler aufgrund der Dichteänderungen des zu messenden Mediums bei größeren Temperaturschwankungen. Es treten weitere Ungenauigkeiten durch das Zahnspiel und die Reibung im Reduziergetriebe sowie Meßungenauigkeiten der Kodierscheibe hinzu. Die Meßfehler sind aufgrund dieser vielen Toleranzen und Fehlerquellen so beachtlich, daß bei einer Lagerhaltung im Tank der Bestand nur sehr ungenau festgestellt werden kann.

Es ist Aufgabe der Erfindung, eine Tankfüllstand-Meßeinrichtung mit höherer Meßgenauigkeit zu schaffen.

Die gestellte Aufgabe ist erfindungsgemäß dadurch gelöst, daß die Trommelwelle unmittelbar mit der Welle eines Rotationsimpulsgebers gekuppelt und der Rotationsimpulsgeber mit einer Schlitzscheibe und diese Schlitzscheibe abtastenden Lichtsonden ausgerüstet ist.

Durch die unmittelbare Kupplung werden das Zahnspiel und die Reibung und damit die aus dem aus der Zwischenschaltung des Reduziergetriebes folgenden Meßungenauigkeiten ausgeschaltet. Der mit der lichtabgetasteten Schlitzscheibe ausgerüstete Rotationsimpulsgeber erlaubt eine außerordentlich dichte Meßimpulsfolge und damit Meßgenauigkeit. Die Schnelligkeit der Impulsfolge hat einen maßgeblichen Einfluß auf die Genauigkeit der Messung. Es ist ohne weiteres möglich, mit einer Impulsfolge von einem Impuls pro 1 mm Seilweg zu arbeiten. Eine zu schnell springende Anzeigeänderung läßt sich durch den Einsatz eines Schreib-/Lesespeichers im Digitalanzeiger vermeiden. Zur Meßwertübertragung werden gegenüber achtzehn Leitungen beim Winkelkodierer nur noch vier Leitungen (2mal für die Spannungsversorgung und je eine Leitung für Vorwärts und Rückwärtszählung) erforderlich.

Aus der DE-GmS 70 03 885 ist es bekannt, zur Anzeige einen elektrischen Geber, beispielsweise einen Impulsgeber, einen Potentiometergeber oder einen Drehmelder einzusetzen. Genauere Angaben über die Art des Aufbaues der elektrischen Anzeige sind aber nicht aufgezeigt.

Zugleich mit der steigenden Genauigkeit werden die Erstellungskosten der Meßeinrichtung wesentlich abgesenkt.

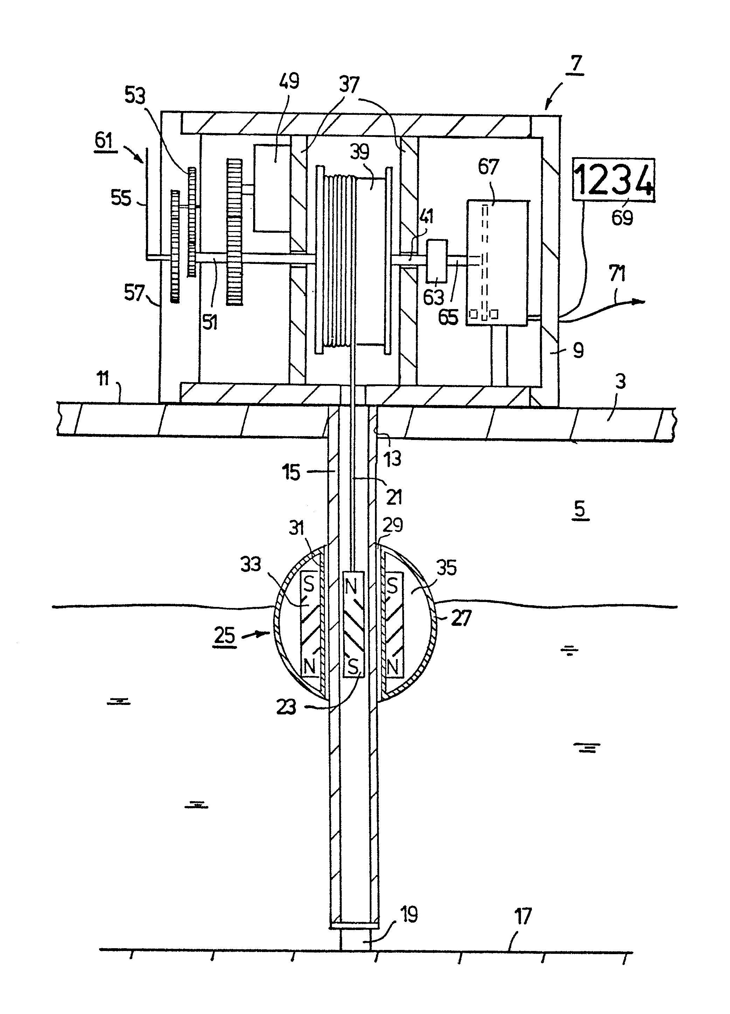

Die Erfindung wird anhand des in der Zeichnung dargestellten Ausführungsbeispieles näher erläutert.

Auf die Abdeckung 3, beispielsweise eines Mineralöl- oder Wassertanks, ist eine Meßeinrichtung 7 aufgesetzt. Diese Meßeinrichtung 7 weist ein Gehäuse 9 auf, das auf der Oberseite 11 der Abdeckung 3 aufsitzt. Durch einen Durchbruch 13 in der Tankabdeckung ist ein Rohr 15 hindurchgeführt, das bis auf den Boden 17 des Tanks reicht. Durch ein Pufferglied 19 ist das Rohr 15 am Boden 17 elastisch abgestützt. An einem Seil 21 hängend befindet sich in dem Rohr eine Meßsonde 23. Diese Meßsonde 23 ist ein dauermagnetischer Stab, der axial magnetisiert und vertikal aufgehängt ist.

Auf dem Rohr 15 ist ein Kugelschwimmer 25 auf- und abfahrbar. Dieser Kugelschwimmer schwimmt jeweils im Bereich der Oberfläche der Flüssigkeit im Tank 5. Der Kugelschwimmer 25 besteht aus einer Hohlkugel 27. Durch die Hohlkugel 27 erstreckt sich ein hülsenförmiger Durchbruch 29. An der Hülsenwand 31 sind ringförmig weitere Dauermagnetsäulen 33 angeordnet, und zwar in vertikaler Richtung. Auf diese Weise nehmen die Dauermagnetsäulen 23 des Kugelschwimmers 25 bei Längsbewegungen des Kugelschwimmers 25 auf dem Rohr 15 die Meßsonde 23 mit. Den Auftrieb verleiht dem Kugelschwimmer 25 eine im Hohlraum 35 vorgesehene Gas- oder Luftfüllung.

In dem Gehäuse 9 der Meßeinrichtung 7 ist zwischen zwei Stützwänden 37 eine Seiltrommel 39 mit ihrer Trommelwelle 41 gelagert. Auf die durch die Stützwände 37 hindurchgreifende Trommelwelle 41 wirkt der Federmotor 49. Dieser Federmotor 49 ist in der Lage, das Seil immer gespannt zu halten.

Über einen Wellenstummel 51 kann die Trommelwelle 41 ein Reduziergetriebe 53 antreiben, das ein Zeigerpaar 55 vor einer Skalenscheibe 57 verdreht. Reduziergetriebe 53, Zeigerpaar 55 und Skala 57 bilden in einem Gehäuse 59 ein mechanisches Anzeigegerät 61, das häufig noch gewünscht ist. Dieses mechanische Anzeigegerät kann aber, wenn es nicht benötigt wird, entfallen.

Unmittelbar mit der Trommelwelle 41 ist über eine Kupplung 63 die Antriebswelle 65 eines Rotationsimpulsgebers 67 gekuppelt. Dieser Rotationsimpulsgeber 67 ist ein Bauteil, bei dem beispielsweise mit Hilfe einer oder mehrerer Lichtsonden eine Schlitzscheibe abgetastet wird. Die beim Abtasten entstehenden Lichtimpulse werden in elektrische Impulse umgesetzt, aus denen die eingebaute Elektronik digitale Anzeigewerte bildet. Die Anzeige erfolgt beispielsweise mit Hilfe eines in der Nähe oder auch weiter entfernt von der Meßeinrichtung angecrdneten Digitalanzeigers 69. Weitere Impulse können über Leitungen 71 zu einer Zentrale weitergeleitet werden, in der die Meßwerte ständig speicher- und weiterverarbeitbar sind.

Der Zähler muß mit einer schnellen Impulsfolge arbeiten, um die Messungen exakt genug durchführen zu können. Der Impulsgeber ist deshalb so ausgelegt, daß pro 1 mm Seilweg mindestens ein Impuls abgegeben wird. Ein im Digitalanzeiger 69 eingebauter Schreib-/Lesespeicher sorgt für das Festhalten der ermittelten Meßwerte. Die festgehaltenen Meßwerte dienen dann als Basiswerte bei Meßwertveränderungen nach oben oder unten.

0081832

Patentansprüche:                                    D-006 81
━━━━━━━━━━━━━

1. Tankfüllstand-Meßeinrichtung mit einer Meßsonde (23) an einem von einer Trommel (39) abwickelbaren Seil (21), mit einem das Seil (21) auf Spannung haltenden, an der Trommelwelle (41) angreifenden Aufrollmotor (49) und einem elektrischen Anzeigegerät (61), dadurch gekennzeichnet, daß die Trommelwelle (41) unmittelbar mit der Welle (65) eines Rotationsimpulsgebers (67) gekuppelt und der Rotationsimpulsgeber (67) mit einer Schlitzscheibe und diese Schlitzscheibe abtastenden Lichtsonden ausgerüstet ist.

2. Tankfüllstand-Meßeinrichtung nach Anspruch 1, dadurch gekennzeichnet, daß der Impulsgeber (67) pro 1 mm Seillänge mindestens einen Impuls abgibt.

3. Tankfüllstand-Meßeinrichtung nach den Ansprüchen 1 und 2, dadurch gekennzeichnet, daß der Impulsgeber bzw. der Digitalanzeiger (69) mit einem Schreib-/Lesespeicher versehen ist.

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | **EINSCHLÄGIGE DOKUMENTE** | | EP 82111499.8 |
| A | <u>US - A - 3 974 695</u> (LERNER)<br>* Fig. 1; Spalte 2, Zeilen 3-55 * | 1 | G 01 F 23/10 |
| A | <u>DE - B - 2 151 094</u> (ENDRESS)<br>* Fig.; Anspruch 1; Spalte 5, Zeilen 8-19; Spalte 6, Zeilen 21-30 * | 1 | |
| D,A | <u>DE - A1 - 2 426 085</u> (OTT)<br>* Fig. 1-3; Seite 4, Zeile 18 - Seite 6, Zeile 16 * | 1,3 | |
| A | SOVIET INVENTIONS ILLUSTRATED, Sektion R. Woche C 16, 28. Mai 1980<br>DERWENT PUBLICATIONS LTD, London R 13<br>* SU-679-806 (FRUNZE POLY) * | 1 | **RECHERCHIERTE SACHGEBIETE (Int. Cl. ³)**<br><br>G 01 F 23/00 |
| A | <u>DD - A - 125 535</u> (VEB RFT)<br>* Fig. 1; Seite 5, Zeile 20 - Seite 8, Zeile 11 * | 1 | |
| A | <u>DE - B2 - 2 229 338</u> (FRITZ)<br>---- | | |

Der vorliegende Recherchenbericht wurde für alle Patentansprüche erstellt.

| Recherchenort | Abschlußdatum der Recherche | Prüfer |
|---|---|---|
| WIEN | 09-03-1983 | GRONAU |